# FASCICULE DE BREVET EUROPEEN

(11) **EP 1 922 918 B1**
(45) Date de publication et mention de la délivrance du brevet: **23.07.2014**
(21) Numéro de dépôt: 07291360.1
(22) Date de dépôt: 13.11.2007
(51) Int. Cl.: A01J 25/16

(54) **Procédé de retournement d'au moins un produit laitier, notamment d'un fromage, pendant son élaboration ou son affinage**
Verfahren zum Wenden mindestens eines Milchprodukts, insbesondere eines Käses, während seiner Herstellung oder Reifung
Method for turning at least one dairy product, in particular a cheese, during its production or maturing

(30) Priorité: 17.11.2006 FR 0610051
(43) Date de publication de la demande: 21.05.2008
(73) Titulaire: Servi Doryl, 37130 Langeais (FR)
(72) Inventeur: Helaine, Christian Clément Eugène, 37130 Cinq Mars la Pile (FR)
(74) Mandataire: Zimmermann, Alain

(56) Documents cités:
- FR-A- 1 421 060
- FR-A- 2 671 060
- US-A- 4 108 056

## Description

La présente invention concerne un procédé et un dispositif de retournement d'un produit laitier, notamment d'un fromage, reposant sur un support.

Divers produits laitiers, tels que des fromages ou d'autres préparations alimentaires de ce type, doivent être retournés durant leur élaboration et/ou leur affinage. Ainsi, les fromages à pâte molle, par exemple à croûte fleurie, à croûte séchée ou à croûte lavée, sont retournés pour homogénéiser leur affinage, notamment pour que l'aération de la pâte soit optimale et parfaitement répartie.

A cet effet, les fromages sont en général placés sur un support plan tel qu'une claie ajourée en matière plastique ou en métal qui est transportée habituellement par un convoyeur à bande animé d'un mouvement de type pas à pas.

Des moyens mécaniques sont alors utilisés pour retourner chaque fromage ou tous les fromages reposant sur une même claie. Il existe également des solutions pour retourner la claie supportant les fromages, voire une pile de claies.

De tels moyens sont notamment décrits dans les demandes de brevets FR-A-2 732 552 ou FR-A-2 792 167.

Cependant, les dispositifs et procédés décrits dans ces documents ne donnent pas satisfaction car les fromages reposant sur une première claie sont déposés, après retournement, sur une autre claie. Un risque de contamination est possible d'une claie à l'autre. En effet, si un fromage reposant sur une première claie est contaminé, par exemple par un champignon ou une moisissure, l'emplacement qu'il libère une fois déposée sur la seconde claie risque de contaminer un nouveau fromage. De plus, le fromage contaminé contamine également la seconde claie sur laquelle il est déposé après retournement.

Par ailleurs, les dispositifs et procédés de l'art antérieur ne permettent pas de retourner convenablement des fromages déposé sur une même claie et ayant des hauteurs différentes. Un risque de mouvement des fromages les uns par rapports aux autres, ou par rapport aux claies de départ et d'arrivée, peut également apparaître. Or, l'écartement des fromages les uns par rapport aux autres est un critère important pour favoriser et optimiser l'aération de leurs faces latérales

Enfin, le fait que les fromages passent d'une claie à l'autre ne permet pas de réaliser une traçabilité efficace des claies, notamment par ajout d'étiquettes électronique. Cela peut constituer un inconvénient important pour leur expédition ultérieure, leur nettoyage, leur transport et leur stockage.

Les conséquences résultant des divers inconvénients cités précédemment sont que la production de fromages peut être ralentie, que le retournement peut être mal réalisé, aboutissant à des pertes trop importantes de fromages à mettre au rebut, et que les coûts et durée de production peuvent augmenter considérablement.

Un but de la présente invention est donc de résoudre les problèmes cités précédemment à l'aide d'une solution simple à mettre en oeuvre et à utiliser, fiable et peu coûteuse.

Pour cela, l'invention propose de faire en sorte que les fromages, une fois retournés, soient reposés sur leur claie d'origine.

Plus précisément, la présente invention a pour objet un procédé de retournement d'au moins un produit laitier, notamment d'un fromage, pendant son élaboration ou son affinage, le produit laitier comportant des première et seconde faces et reposant sur un support par l'intermédiaire de sa première face, caractérisé en ce qu'il comprend les étapes consistant à :
a) soumettre la seconde face du produit laitier à une aspiration pour saisir ce dernier et l'éloigner du support en le soulevant,
b) soumettre la première face du produit laitier à une aspiration,
c) cesser de soumettre la seconde face du produit laitier à l'aspiration en même temps ou après que la première face est soumise à l'aspiration,
d) continuer à soumettre la première face à l'aspiration et faire pivoter le produit laitier sur lui-même de manière à positionner sa seconde face à proximité immédiate du support, en regard de ce dernier, et
e) cesser de soumettre la première face à l'aspiration de façon à libérer le produit laitier pour qu'il vienne reposer sur le support par l'intermédiaire de sa seconde face.

Selon des modes de réalisation préférés de la présente invention :
- le procédé consiste à déplacer le support d'une position amont à une position aval lorsque le produit laitier est éloigné dudit support ;
- la seconde face du produit laitier est soumise à l'aspiration lorsque le support est dans sa position amont, tandis que la première face du produit laitier est soumise à l'aspiration lorsque le support est dans sa position aval ;
- le support est déplacé entre ses positions amont et aval par un convoyeur animé d'un mouvement de type pas à pas ;
- le procédé comprend, après l'étape a), une étape consistant à disposer le produit laitier verticalement pour soumettre sa première face à l'aspiration ;
- en variante, le procédé comprend, après l'étape a), une étape consistant à disposer le produit laitier verticalement pour soumettre sa première face à l'aspiration ; et
- le procédé est mis en oeuvre pour retourner simultanément plusieurs produits laitiers de même section et placés sur un support commun, lesdits produits laitiers ayant des épaisseurs identiques ou différentes.

La présente invention se rapporte également à un dispositif de retournement d'au moins un produit laitier, notamment d'un fromage, pendant son élaboration ou son affinage, le produit laitier comportant des première et seconde faces et reposant sur un support par l'intermédiaire de sa première face, caractérisé en ce qu'il comprend :
- un premier moyen pour soumettre la seconde face du produit laitier à une aspiration afin de saisir ce dernier et de l'éloigner du support en le soulevant,
- un second moyen pour soumettre la première face du produit laitier à une aspiration, récupérer ce dernier du premier moyen d'aspiration, faire pivoter le produit laitier sur lui-même de manière à positionner sa seconde face à proximité immédiate du support, en regard de ce dernier, et reposer le produit laitier sur le support par l'intermédiaire de sa seconde face ;

De préférence, le dispositif comprend un convoyeur portant le support et animé d'un mouvement de type pas à pas pour déplacer ledit support d'une position amont à une position aval, les premier et second moyens d'aspiration étant disposés à l'aplomb du convoyeur, dans sa direction de déplacement.

En variante de réalisation, le dispositif comprend un convoyeur portant le support et animé d'un mouvement de type pas à pas pour déplacer ledit support d'une position amont à une position aval, les premier et second moyens d'aspiration étant disposés à l'aplomb du convoyeur, perpendiculairement à celui-ci.

Avantageusement, les moyens d'aspiration comprennent chacun une plaque aspirante souple s'adaptant à la forme et/ou l'épaisseur des produits laitier à retourner.

En variante les moyens d'aspiration comprennent chacun un réseau de ventouses souples s'adaptant à la forme et/ou l'épaisseur des produits laitier à retourner.

Selon un autre aspect de la présente invention, les moyens d'aspiration sont montés mobiles en rotation l'un par rapport à l'autre de manière à retourner le produit laitier sur lui-même.

Plus précisément, les premier et second moyens d'aspiration sont chacun aptes à pivoter de ± 90° de façon à pouvoir être disposés soit face au convoyeur dans des positions initiale et finale, soit l'un en face de l'autre dans une position intermédiaire de transfert du produit laitier du premier au second moyen d'aspiration.

En variante de réalisation, le second moyen d'aspiration est apte à pivoter de ± 180° de façon à pouvoir être disposé soit face au convoyeur dans des positions initiale et finale, soit sous le premier moyen d'aspiration dans une position intermédiaire de transfert du produit laitier du premier au second moyen d'aspiration.

L'invention va maintenant être décrite plus en détail en référence à des modes de réalisation particuliers donnés à titre d'illustration uniquement et représentés sur les figures annexées dans lesquelles :
- la figure 1 est une vue de dessus d'une claie sur laquelle repose des fromages ronds ayant un diamètre identique ;
- les figures 2 à 9 illustrent de manière schématique les différentes étapes de retournement desdits fromages selon un premier mode de réalisation ;
- les figures 10 à 17 illustrent de manière schématique les différentes étapes de retournements desdits fromages selon un deuxième mode de réalisation,
- la figure 18 est une vue de dessus d'un premier mode de réalisation d'un moyen d'aspiration conforme à la présente invention ;
- la figure 19 est une vue en coupe selon la ligne A-A de la figure 15 ; et
- la figure 20 est une vue en coupe d'un deuxième mode de réalisation du moyen d'aspiration.

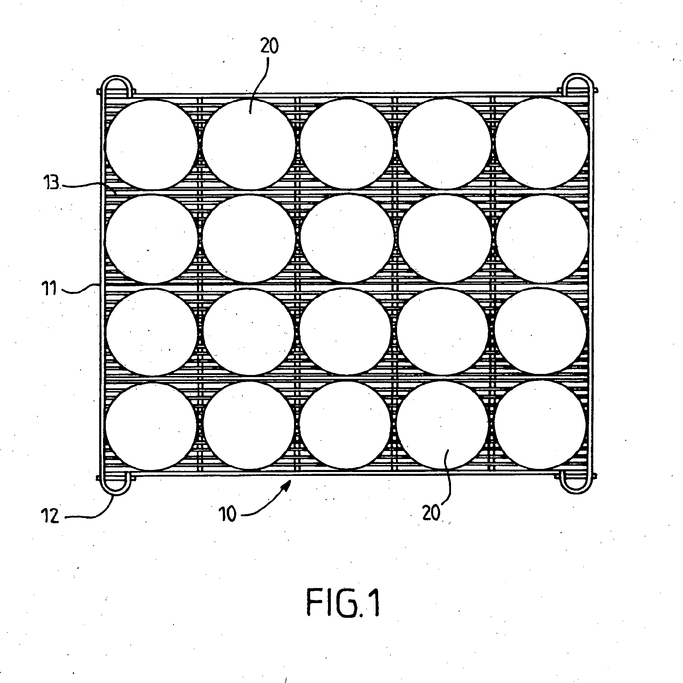

La figure 1 représente, en vue de dessus schématisée, une claie 10 de type connu et sur laquelle reposent des fromages 20 en cours d'élaboration ou d'affinage. La claie 10 est réalisée par exemple en métal alimentaire, tel que de l'acier inoxydable. La claie 10 possède une structure ajourée 11 ayant une forme générale de parallélépipède rectangle. Cette structure ajourée 11 est munie de pieds 12 à ses quatre coins et présente une surface plane supérieur 13 recevant lesdits fromages 20.

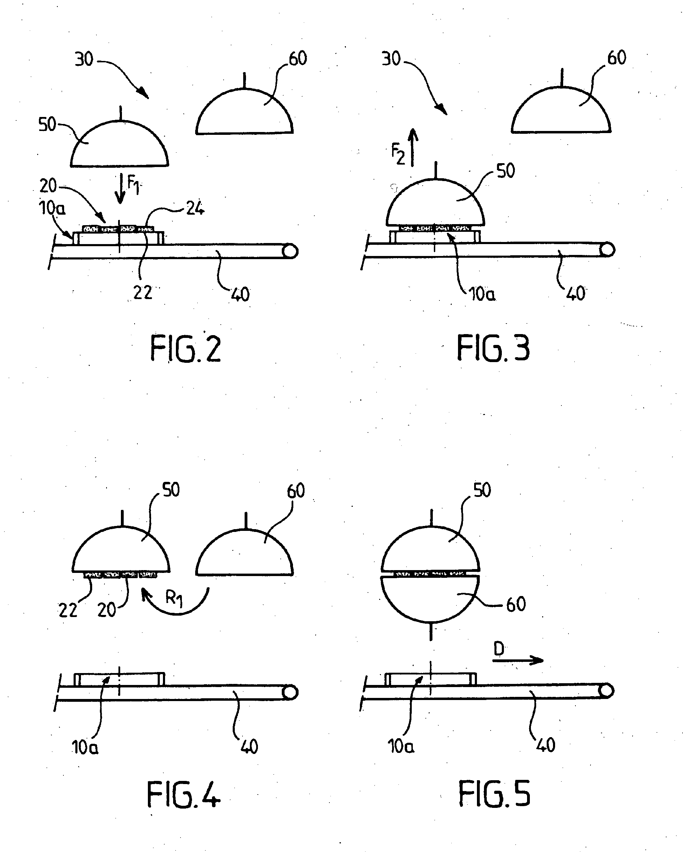

La claie 10 est adaptée pour être utilisée en relation avec un dispositif de retournement de fromage 30 mis en oeuvre par un procédé de retournement de fromages illustré par les figures 2 à 17.

Un premier mode de réalisation du procédé de retournement de fromages conforme à la présente invention est décrit en relation avec les figures 2 à 9.

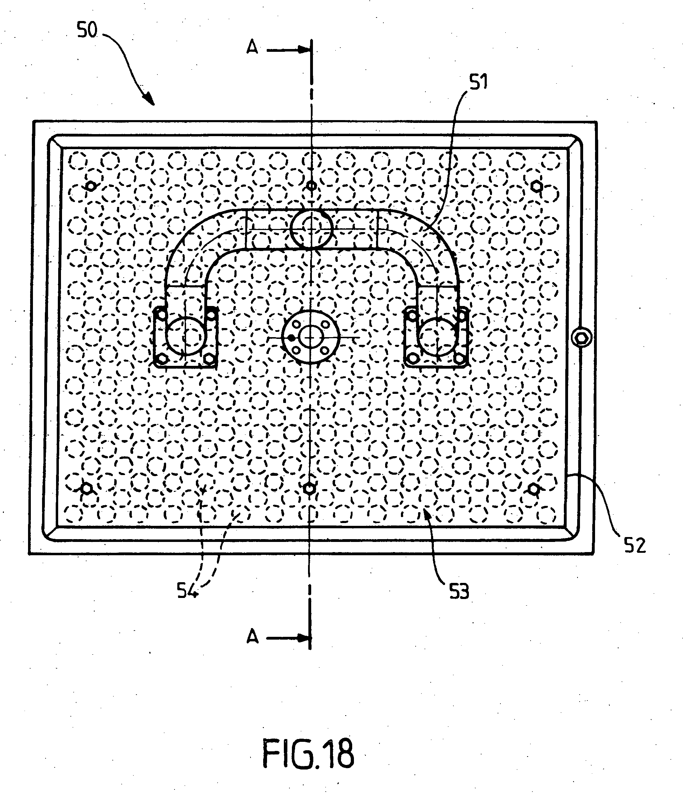

Comme cela est visible sur la figure 2, le dispositif de retournement de fromages 30 comprend un convoyeur à bande 40, de type connu, à l'aplomb duquel sont alignés un premier moyen d'aspiration 50 et un second moyen d'aspiration 60 qui seront décrit plus en détail ultérieurement en relation avec les figures 18 à 20.

Une première claie 10a repose sur le convoyeur à bande 40, sous le premier moyen d'aspiration 50. Le convoyeur à bande 40 est adapté pour être animé d'un mouvement de type pas à pas précis permettant à la première claie 10a de passer d'une position amont, dans laquelle elle est placée à l'aplomb du premier moyen d'aspiration 50, à une position aval, dans laquelle elle est placée à l'aplomb du second moyen d'aspiration 60. Les moyens d'aspiration 50 et 60 du dispositif de retournement 30 sont donc disposés selon une direction d'amont en aval qui correspond au sens de déplacement des claies sur le convoyeur à bande 40.

Dans la première étape illustrée sur la figure 2, plusieurs fromages 20 de même diamètre, mais pouvant présenter des épaisseurs différentes à quelques centimètres près, sont disposés horizontalement sur la première claie 10a. Les fromages 20 reposent sur la première claie 10a par l'intermédiaire d'une première face 22 opposée à une seconde face 24. Dans cette position, les fromages sont prêts à être saisis.

Dans une étape suivante illustrée sur la figure 3, le premier moyen d'aspiration 50 est descendu verticalement selon la flèche F1 en direction de la première claie 10a de manière à être plaqué contre la seconde surface 24 de chacun des fromages 20. Une aspiration est alors exercée par le premier moyen d'aspiration 50 sur la seconde face 24 de chacun des fromages 20 pour décoller ceux-ci de la première claie 10a.

Dans une étape illustrée sur la figure 4, tous les fromages 20 de la première claie 10a sont saisis par le premier moyen d'aspiration 50 et soulevés selon la flèche F2 pour être éloignés de ladite claie 10a. Pendant ce temps, le second moyen d'aspiration 60 ne se déplace pas, ni la première claie 10a.

Dans une étape suivante illustrée sur figure 5, le second moyen d'aspiration 60 est pivoté à 180° dans le sens des aiguilles d'une montre selon la flèche R1 pour venir se placer sous le premier moyen d'aspiration 50, à l'aplomb de ce dernier. Le second moyen d'aspiration 50 est alors plaqué contre la première face 22 de chacun des fromages 20.

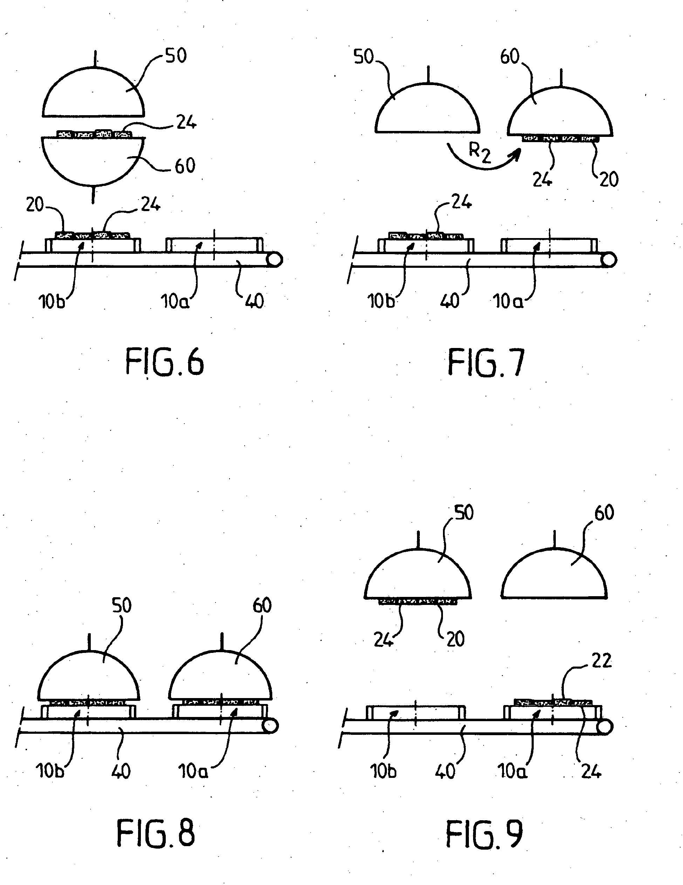

Dans une étape illustrée sur la figure 6, l'aspiration exercée par le premier moyen d'aspiration 50 sur la seconde face 24 de chacun des fromages 20 est interrompue en même temps ou immédiatement après qu'une aspiration est exercée par le second moyen d'aspiration 60 sur la première face 22 de chacun des fromages 20. Ensuite, les premier et second moyens d'aspiration 50 et 60 sont éloignés verticalement l'un de l'autre, de sorte que les fromages 20 sont désormais portés par le second moyen d'aspiration 60. De préférence, la première face 22 de chacun des fromages 20 est soumise à l'aspiration du second moyen d'aspiration 60 avant d'éloigner les premier et second moyens d'aspiration l'un de l'autre. Ceci permet d'empêcher que les fromages 50 chutent sur le second moyen d'aspiration 60 lorsque la seconde face 24 de chacun des fromages 20 n'est plus soumise à l'aspiration exercée par le premier moyen d'aspiration 50. Durant toute cette étape, les fromages 20 restent disposés horizontalement.

Entre les étapes illustrées sur les figures 5 et 6, le convoyeur à bande 40 déplace la claie 10a d'un pas en aval selon la direction D de manière à la positionner à l'aplomb du second moyen d'aspiration 60, comme cela est visible sur la figure 6. Simultanément, une deuxième claie 10b supportant de nouveaux fromages 20 identiques ou différents de ceux supportés par la première claie 10a vient se positionner à l'aplomb du premier moyen d'aspiration 50.

En variante de réalisation, le déplacement des claies 10a et 10b d'amont en aval peut être effectué après l'étape illustrée sur la figure 6. En tout état de cause, la claie 10a avance d'un pas alors que les fromages 20 sont éloignés et placés au-dessus de celle-ci.

Dans une étape illustrée sur la figure 7, le second moyen d'aspiration 60 pivote de nouveau à 180° selon la flèche R2, de préférence dans le sens inverse, c'est-à-dire dans le sens contraire des aiguilles d'une montre. Cette rotation à 180° permet de retourner les fromages 20. Grâce à l'aspiration exercée par le second moyen d'aspiration 60 sur la première face 22 de chacun des fromages 20, ces derniers sont maintenus en l'air à l'aplomb de la première claie 10a. Dans cette position, la seconde face 24 de chacun des fromages 20 est placée au dessus et en regard de la première claie 10a.

Dans une étape illustrée sur la figure 8, le second moyen d'aspiration 60 descend verticalement en direction de la première claie 10a et pose les fromages 20 sur celle-ci par l'intermédiaire de leur seconde face 24.

Simultanément, le premier moyen d'aspiration 50 est également descendu pour venir se plaquer contre la seconde face 22 de chacun des fromages 20 de la deuxième claie 10b de façon à recommencer un cycle qui se poursuit par l'étape illustrée sur la figure 9 correspondant sensiblement à l'étape illustrée sur la figure 4.

Ainsi, grâce au procédé de la présente invention, les fromages 20 reposant par l'intermédiaire de leur première face 22 sur la première claie 10a ont d'abord subit une aspiration exercée sur leur seconde face 24 par l'intermédiaire du premier moyen d'aspiration 50. Puis, ils ont été retournés à 180° et transférés du premier moyen d'aspiration 50 au second moyen d'aspiration 60. Enfin, ils ont été reposés sur leur claie d'origine 10a par l'intermédiaire de leur seconde face 24.

Ces étapes sont répétées pour chacune des claies 10 suivantes disposées les unes à la suite des autres sur le convoyeur à bande 40, de sorte que les fromages 20 sont systématiquement reposés sur leur claie d'origine après retournement. Ceci permet d'éviter une éventuelle contamination d'une claie à une autre claie par un ou plusieurs fromages.

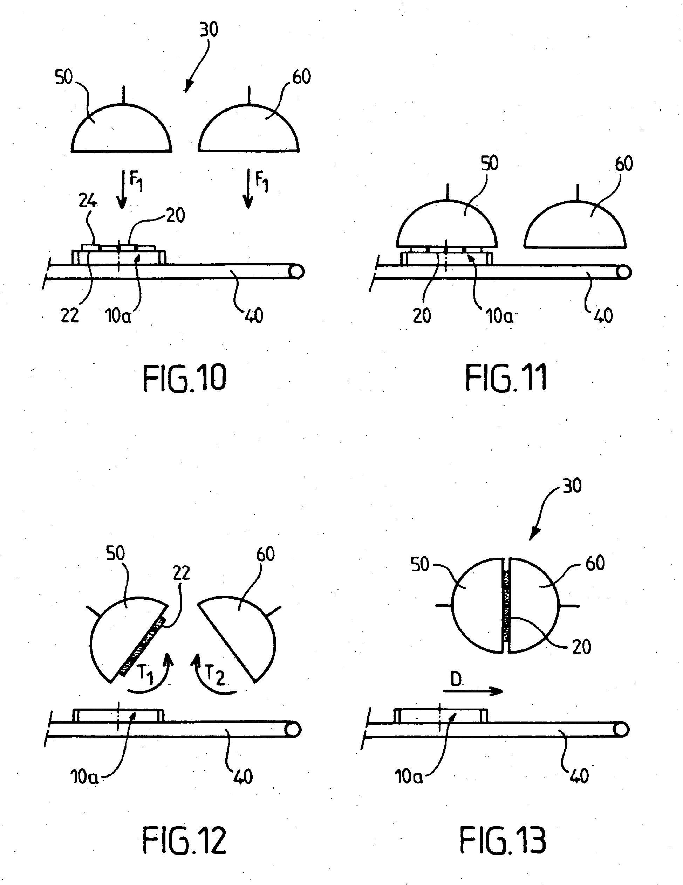

Une variante de réalisation du procédé de retournement conforme à la présente invention est illustrée sur les figures 10 à 17.

Dans la première étape illustrée sur la figure 10, plusieurs fromages 20 de même diamètre, mais pouvant présenter des épaisseurs différentes à quelques centimètres près, sont disposés horizontalement sur la claie 10a. Les fromages 20 reposent sur la première claie 10a par l'intermédiaire d'une première face 22 opposée à une seconde face 24.

Dans une étape suivante illustrée par la figure 11, le premier moyen d'aspiration 50 est descendu verticalement selon la flèche F1 en direction de la première claie 10a de manière à être plaqué contre la seconde surface 24 de chacun des fromages 20. Une aspiration est alors exercée par le premier moyen d'aspiration 50 sur la seconde face 24 de chacun des fromages 20 pour décoller ceux-ci de la première claie 10a. Le second moyen d'aspiration 60 descend également verticalement selon la flèche F1 en direction du convoyeur à bande 40.

Dans une étape suivante illustrée par les figures 12 et 13, le premier moyen d'aspiration 50 pivote à 90° dans un sens, par exemple dans le sens inverse des aiguilles d'une montre tel qu'illustré par la flèche T1, tandis que le second moyen d'aspiration 60 pivote à 90° dans le sens contraire illustré par la flèche T2. Ainsi, les deux moyens d'aspiration 50 et 60 se retrouvent placés face à face, avec les fromages 20 disposés verticalement entre eux. Tant que le second moyen d'aspiration 60 n'est pas au contact de la première face 22 de chacun des fromages 20, le premier moyen d'aspiration 50 continue d'exercer une aspiration au niveau de leur seconde face 24.

Une fois les fromages 20 au contact du second moyen d'aspiration 60, comme illustré sur la figure 13, la première face 22 de chacun des fromages 20 est alors soumise à une aspiration exercée par le second moyen d'aspiration 60, tandis que l'aspiration exercée par le premier moyen d'aspiration 50 sur la seconde face 24 de chacun des fromages 20 est arrêtée.

Ainsi, quelles que soient les circonstances, au moins une des deux faces 22 ou 24 de chacun des fromages 20 est soumise à une aspiration lorsque les fromages sont placés verticalement. Ceci évite aux fromages 50 de tomber par gravité sur la claie 10a ou sur le convoyeur à bande 40.

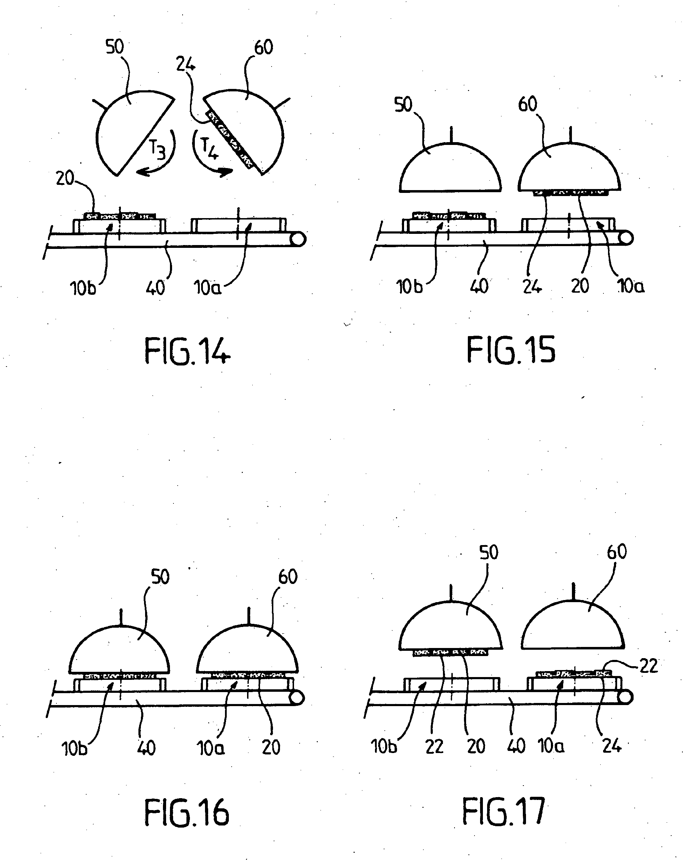

Dans l'étape illustrée sur les figures 14 et 15, les deux moyens d'aspiration 50 et 60 pivotent dans leur sens opposé respectif selon les flèches T3 et T4 de manière à retourner les fromages 20. Simultanément au mouvement coordonné des deux moyens d'aspiration 50 et 60 pour qu'ils retournent dans leur position horizontale, le convoyeur à bande 40 déplace la claie 10a d'un pas en aval selon la direction D de manière à la positionner à l'aplomb du second moyen d'aspiration 60. En même temps, une deuxième claie 10b supportant de nouveaux fromages 20 identiques ou différents de ceux supportés par la première claie 10a vient se positionner à l'aplomb du premier moyen d'aspiration 50.

En variante de réalisation, le déplacement de la première claie 10a d'un pas en aval à l'aide du convoyeur à bande 40 peut être réalisé juste après que le premier moyen d'aspiration 50 a saisit les fromages, c'est-à-dire lors de l'étape de pivotement des deux moyens d'aspiration illustrée par les figures 12 et 13. En tout état de cause, la claie 10a avance d'un pas alors que les fromages 20 sont éloignés et placés au-dessus de celle-ci.

Dans une étape illustrée sur la figure 16, le second moyen d'aspiration 60 descend verticalement en direction de la première claie 10a et pose les fromages 20 sur celle-ci par l'intermédiaire de leur seconde face 24. Simultanément, le premier moyen d'aspiration 50 est également descendu pour venir se plaquer contre la première face 22 de chacun des fromages 20 de la deuxième claie 10b qui vient d'arriver de façon à recommencer un cycle qui se poursuit par l'étape illustrée sur la figure 17 correspondant sensiblement à l'étape illustrée sur la figure 11.

Ainsi, la différence majeure entre les deux modes de réalisation ainsi décrits réside dans la façon de transférer les fromages 20 du premier moyen d'aspiration 50 au second moyen d'aspiration 60.

Dans le premier mode de réalisation, le transfert est réalisé avec les fromages 20 disposés horizontalement (voir figures 5 et 6), alors que dans le second mode de réalisation, le transfert est réalisés avec les fromages 20 disposés verticalement (voir figures 13). Ceci est dû aux mouvements différents qu'effectuent les deux moyens d'aspiration afin de venir se placer l'un en face de l'autre.

Les moyens d'aspiration sont représentés plus en détail sur les figures 18 à 20. Seul le premier moyen d'aspiration 50 est représenté et décrit, le second moyen d'aspiration 60 étant identique.

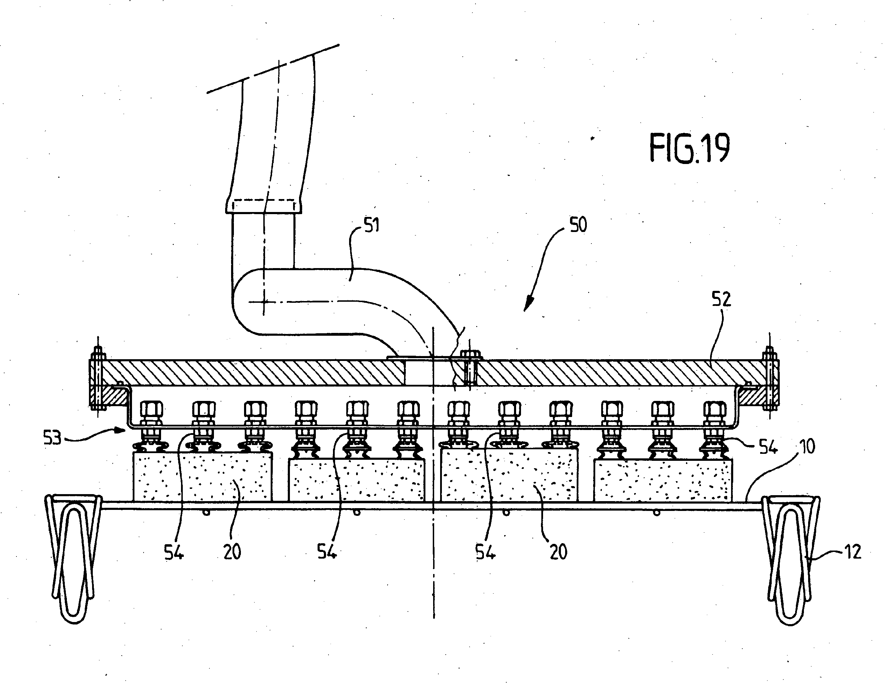

Selon un premier mode de réalisation illustré par les vues de dessus et en coupe des figures 18 et 19, le moyen d'aspiration 50 comprend un bras de support articulé 51 supportant une plaque de support 52. La plaque de support 52 est munie d'un réseau régulier 53 de petites ventouses 54 élastiquement déformable axialement adaptées pour venir épouser, par petits groupes de plusieurs, la forme de chacun des fromages supportés par la claie 10.

Ainsi, comme cela est visible sur la vue en coupe de la figure 19, les fromages 20 présentent des hauteurs différentes. Grâce à cette structure particulière, les ventouses 54 peuvent s'adapter parfaitement à de multiples formes et hauteurs de fromages 20 et exercer une aspiration optimale sur les faces 22 ou 24 de ceux-ci afin de les maintenir au contact du moyen d'aspiration correspondant lors de leurs déplacements (soulèvement, retournement, dépose).

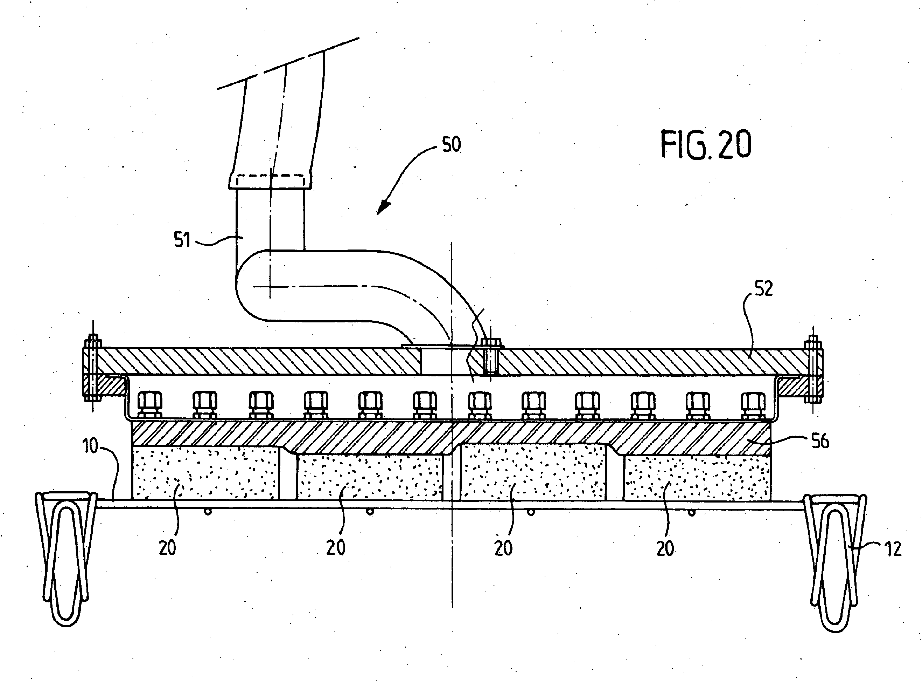

Sur la figure 20, le réseau 53 de ventouses 54 a été remplacé par une plaque d'aspiration souple 56 muni d'une multitude de petits orifices d'aspiration (non représentés). De la même façon que précédemment, la plaque souple 56 s'adapte parfaitement à des fromages 20 ayant des épaisseurs différentes les uns par rapport aux autres.

Il va de soi que la description détaillée de l'objet de l'Invention, donnée uniquement à titre d'illustration, ne constitue en aucune manière une limitation, les équivalents techniques étant également compris dans le champ de la présente invention.

Ainsi, les produits laitiers 20 peuvent présenter une forme autre que celle d'un disque, par exemple une forme carrée, rectangulaire, voire être constitué par des portions prédécoupés.

Les premier et second moyens d'aspiration 50 et 60 peuvent être disposés perpendiculairement au convoyeur à bande 40, et donc perpendiculairement au sens de déplacement D des claies, sans que cela modifie les étapes d'aspiration, de transfert et de dépose des fromages sur la claie.

Le convoyeur à bande peut être remplacé par tout moyen adapté pour supporter des claies et les déplacer pas à pas sous les moyens d'aspiration.

## Revendications

1. Procédé de retournement d'au moins un produit laitier (20), notamment d'un fromage, pendant son élaboration ou son affinage, le produit laitier (20) comportant des première et seconde faces (22, 24) et reposant sur un support (10) par l'intermédiaire de sa première face (22), **caractérisé en ce qu'**il comprend les étapes consistant à :
a) soumettre la seconde face (24) du produit laitier (20) à une aspiration pour saisir ce dernier et l'éloigner du support (10) en le soulevant,
b) soumettre la première face (22) du produit laitier (20) à une aspiration,
c) cesser de soumettre la seconde face (24) du produit laitier (20) à l'aspiration en même temps ou après que la première face (22) est soumise à l'aspiration,
d) continuer à soumettre la première face (22) à l'aspiration et faire pivoter le produit laitier (20) sur lui-même de manière à positionner sa seconde face (24) à proximité immédiate du support (10), en regard de ce dernier, et
e) cesser de soumettre la première face (22) à l'aspiration de façon à libérer le produit laitier (20) pour qu'il vienne reposer sur le support (10) par l'intermédiaire de sa seconde face (24).

2. Procédé selon la revendication 1, **caractérisé en ce qu'**il consiste à déplacer le support (10) d'une position amont à une position aval lorsque le produit laitier (20) est éloigné dudit support (10).

3. Procédé selon la revendication 2, **caractérisé en ce que** la seconde face (24) du produit laitier (20) est soumise à l'aspiration lorsque le support (10) est dans sa position amont, tandis que la première face ((22) du produit laitier (20) est soumise à l'aspiration lorsque le support (10) est dans sa position aval.

4. Procédé selon la revendication 2 ou 3, **caractérisé en ce que** le support (10) est déplacé entre ses positions amont et aval par un convoyeur (40) animé d'un mouvement de type pas à pas.

5. Procédé selon l'une quelconque des revendications précédentes, **caractérisé en ce qu'**il comprend, après l'étape a), une étape consistant à disposer le produit laitier (20) verticalement pour soumettre sa première face (22) à l'aspiration.

6. Procédé selon l'une quelconque des revendications 1 à 4, **caractérisé en ce qu'**il comprend, après l'étape a), une étape consistant maintenir le produit laitier (20) horizontalement pour soumettre sa première face (22) à l'aspiration.

7. Procédé selon l'une quelconque des revendications précédentes, **caractérisé en ce qu'**il est mis en oeuvre pour retourner simultanément plusieurs produits laitiers (20) de même section placés sur un support commun (10), lesdits produits laitiers (20) ayant des épaisseurs identiques ou différentes.

8. Dispositif de retournement d'au moins un produit laitier (20), notamment d'un fromage, pendant son élaboration ou son affinage, le produit laitier (20) comportant des première et seconde faces (22, 24) et reposant sur un support (10) par l'intermédiaire de sa première face (22), **caractérisé en ce qu'**il comprend :
- un premier moyen (50) pour soumettre la seconde face (24) du produit laitier (20) à une aspiration afin de saisir ce dernier et de l'éloigner du support (10) en le soulevant,
- un second moyen (60) pour soumettre la première face (22) du produit laitier (20) à une aspiration, récupérer ce dernier du premier moyen d'aspiration (50), faire pivoter le produit laitier (20) sur lui-même de manière à positionner sa seconde face (24) à proximité immédiate du support (10), en regard de ce dernier, et reposer le produit laitier (20) sur le même support (10) par l'intermédiaire de sa seconde face (24).

9. Dispositif selon la revendication 8, **caractérisé en ce qu'**il comprend un convoyeur (40) portant le support (10) et animé d'un mouvement de type pas à pas pour déplacer ledit support (10) d'une position amont à une position aval, les premier et second moyens d'aspiration (50, 60) étant disposés à l'aplomb du convoyeur (40), dans sa direction de déplacement (D).

10. Dispositif selon la revendication 8, **caractérisé en ce qu'**il comprend un convoyeur (40) portant le support (10) et animé d'un mouvement de type pas à pas pour déplacer ledit support (10) d'une position amont à une position aval, les premier et second moyens d'aspiration (50, 60) étant disposés à l'aplomb du convoyeur (40), perpendiculairement à celui-ci.

11. Dispositif selon l'une quelconque des revendications 8 à 10, **caractérisé en ce que** les moyens d'aspiration (50, 60) comprennent- chacun une plaque aspirante souple (56) s'adaptant à la forme et/ou l'épaisseur des produits laitiers (20) à retourner.

12. Dispositif selon l'une quelconque des revendications 8 à 10, **caractérisé en ce que** les moyens d'aspiration (50, 60) comprennent chacun un réseau (53) de ventouses souples (55) s'adaptant à la forme et/ou l'épaisseur des produits laitiers (20) à retourner.

13. Dispositif selon l'une quelconque des revendications 8 à 12, **caractérisé en ce que** les moyens d'aspiration (50, 60) sont montés mobiles en rotation l'un par rapport à l'autre de manière à retourner le produit laitier (20) sur lui-même.

14. Dispositif selon là revendication 13, **caractérisé en ce que** les premier et second moyens d'aspiration (50, 60) sont chacun aptes à pivoter de ± 90° de façon à pouvoir être disposés soit face au convoyeur (40) dans des positions initiale et finale, soit l'un en face de l'autre dans une position intermédiaire de transfert du produit laitier (20) du premier moyen d'aspiration (50) au second moyen d'aspiration (60).

15. Dispositif selon la revendication 13, **caractérisé en ce que** le second moyen d'aspiration (60) est apte à pivoter de ± 180° de façon à pouvoir être disposé soit face au convoyeur (40) dans des positions initiale et finale, soit sous le premier moyen d'aspiration (50) dans une position intermédiaire de transfert du produit laitier (20) du premier d'aspiration- (50) au second moyen d'aspiration (60).

## Patentansprüche

1. Verfahren zum Wenden mindestens eines Milcherzeugnisses (20), insbesondere eines Käselaibs, im Verlaufe von dessen Herstellung oder Reifung, wobei das Milcherzeugnis (20) eine erste und eine zweite Seite (22, 24) umfasst und mit seiner ersten Seite (22) auf einer Auflage (10) aufliegt, wobei dieses Verfahren **dadurch gekennzeichnet ist, dass** es folgende Phasen umfasst:
a) die zweite Seite (24) des Milcherzeugnisses (20) wird einem Ansaugvorgang unterzogen, um das Milcherzeugnis zu erfassen und von der Auflage (10) durch Abheben zu entfernen,
b) die erste Seite (22) des Milcherzeugnisses (20) wird einem Ansaugvorgang unterzogen,
c) das Ansaugen der zweiten Seite (24) des Milcherzeugnisses (20) wird beendet, und zwar zum selben Zeitpunkt, wenn die erste Seite (22) dem Ansaugvorgang unterzogen wird, oder hiernach,
d) die erste Seite (22) wird weiterhin dem Ansaugvorgang unterzogen und das Milcherzeugnis (20) wird so um die eigene Achse geschwenkt, dass seine zweite Seite (24) in unmittelbarer Nähe zur Auflage (10) und selbiger gegenüber positioniert wird, und
e) der Ansaugvorgang der ersten Seite (22) wird so beendet, dass das Milcherzeugnis (20) freigegeben wird, so dass es auf der Auflage (10) zum Aufliegen kommt, und zwar mit seiner zweiten Seite (24).

2. Verfahren gemäß dem Patentanspruch 1, **dadurch gekennzeichnet, dass** die Auflage (10) von einer vorgelagerten Position in eine nachgelagerte Position verschoben wird, wenn das Milcherzeugnis (20) von der genannten Auflage (10) entfernt wird.

3. Verfahren gemäß dem Patentanspruch 2, **dadurch gekennzeichnet, dass** die zweite Seite (24) des Milcherzeugnisses (20) dem Ansaugvorgang unterzogen wird, wenn die Auflage (10) sich in ihrer vorgelagerten Position befindet, während die erste Seite (22) des Milcherzeugnisses (20) dem Ansaugvorgang unterzogen wird, wenn die Auflage (10) sich in ihrer nachgelagerten Position befindet.

4. Verfahren gemäß dem Patentanspruch 2 oder 3, **dadurch gekennzeichnet, dass** die Auflage (10) vermittels einer Transportvorrichtung (40) verschoben wird, welche eine Schrittbewegung zwischen ihrer vorgelagerten und ihrer nachgelagerten Position ausführt.

5. Verfahren gemäß einem der voranstehenden Patentansprüche, **dadurch gekennzeichnet, dass** nach Phase a) eine Phase eingeschlossen ist, die darin besteht, dass das Milcherzeugnis (20) vertikal platziert wird, um seine erste Seite (22) dem Ansaugvorgang zu unterziehen.

6. Verfahren gemäß einem der voranstehenden Patentansprüche 1 bis 4, **dadurch gekennzeichnet, dass** nach Phase a) eine Phase eingeschlossen ist, bei der das Milcherzeugnis (20) horizontal so gehalten wird, dass seine erste Seite (22) dem Ansaugvorgang unterzogen wird.

7. Verfahren gemäß einem der voranstehenden Patentansprüche, **dadurch gekennzeichnet, dass** ein gleichzeitiges Wenden mehrerer Milcherzeugnisse (20) mit demselben Querschnitt, die auf einer gemeinsamen Auflage (10) platziert sind, zum Einsatz gelangt, wobei die genannten Milcherzeugnisse (20) gleiche oder unterschiedliche Dicken haben.

8. Wendevorrichtung für mindestens ein Milcherzeugnis (20), insbesondere für einen Käselaib, während dessen Herstellung oder Reifung, wobei das Milcherzeugnis (20) eine erste und eine zweite Seite (22, 24) umfasst und mit seiner ersten Seite (22) auf einer Auflage (10) aufliegt, wobei diese Wendevorrichtung **dadurch gekennzeichnet ist, dass** sie umfasst:
- eine erste Vorrichtung (50), mit der die zweite Seite (24) des Milcherzeugnisses (20) einem Ansaugvorgang unterzogen wird, um letzteres zu erfassen und von der Auflage (10) durch Abheben zu entfernen,
- eine zweite Vorrichtung (60), mit der die erste Seite (22) des Milcherzeugnisses (20) einem Ansaugvorgang unterzogen wird, um letzteres von der ersten Ansaugvorrichtung (50) abzunehmen, um das Milcherzeugnis (20) so um die eigene Achse zu schwenken, dass dessen zweite Seite (24) in unmittelbarer Nähe zur Auflage (10) und dieser gegenüber platziert wird, und um das Milcherzeugnis (20) mit seiner zweiten Seite (24) erneut auf derselben Auflage (10) abzulegen.

9. Vorrichtung gemäß dem Patentanspruch 8, **dadurch gekennzeichnet, dass** sie eine Transportvorrichtung (40) umfasst, die die Auflage (10) trägt, und die eine Schrittbewegung ausführt, um die genannte Auflage (10) von einer vorgelagerten Position in eine nachgelagerte Position zu verschieben, wobei die erste und die zweite Ansaugvorrichtung (50, 60) rechtwinklig zur Transportvorrichtung (40) in deren Verschiebungsrichtung (D) angeordnet sind.

10. Vorrichtung gemäß dem Patentanspruch 8, **dadurch gekennzeichnet, dass** sie eine Transportvorrichtung (40) umfasst, die die Auflage (10) trägt und die eine Schrittbewegung ausführt, um die genannte Auflage (10) von einer vorgelagerten Position in eine nachgelagerte Position zu verschieben, wobei die erste Ansaugvorrichtung und die zweite Ansaugvorrichtung (50, 60) rechtwinklig zur Transportvorrichtung (40) und senkrecht zu dieser angeordnet sind.

11. Vorrichtung gemäß einem der Patentansprüche 6 bis 10, **dadurch gekennzeichnet, dass** die Ansaugvorrichtungen (50, 60) jeweils eine flexible Saugplatte (56) umfassen, welche sich der Form und/oder der Dicke der zu wendenden Milcherzeugnisse (20) anpasst.

12. Vorrichtung gemäß einem der Patentansprüche 8 bis 10, **dadurch gekennzeichnet, dass** die Ansaugvorrichtungen (50, 60) jeweils ein Netz-System (53) aus flexiblen Saugnäpfen (55) umfassen, welche sich der Form und der Dicke der zu wendenden Milcherzeugnisse (20) anpassen.

13. Vorrichtung gemäß einem der Patentansprüche 8 bis 12, **dadurch gekennzeichnet, dass** die Ansaugvorrichtungen (50, 60) im Verhältnis zueinander beweglich und drehbar in der Weise montiert sind, dass das Milcherzeugnis (20) um die eigene Achse gewendet wird.

14. Vorrichtung gemäß dem Patentanspruch 13, **dadurch gekennzeichnet, dass** die erste Ansaugvorrichtung und die zweite Ansaugvorrichtung (50, 60) jeweils in der Weise zu einer Schwenkbewegung um ± 90° befähigt sind, dass sie entweder gegenüber der Transportvorrichtung (40) in einer Anfangs- und Endposition oder einander gegenüber in einer Zwischenposition der Übergabe des Milcherzeugnisses (20) von der ersten Ansaugvorrichtung (50) an die zweite Ansaugvorrichtung (60) angeordnet werden können.

15. Vorrichtung gemäß dem Patentanspruch 13, **dadurch gekennzeichnet, dass** die zweite Ansaugvorrichtung (60) zu einer Schwenkbewegung um ± 180° in der Weise befähigt ist, dass sie entweder gegenüber der Transportvorrichtung (40) in einer Anfangs- und Endposition oder unter der ersten Ansaugvorrichtung (50) in einer Zwischenposition der Übergabe des Milcherzeugnisses (20) von der ersten Ansaugvorrichtung (50) an die zweite Ansaugvorrichtung (60) angeordnet werden kann.

## Claims

1. A method of turning at least one dairy product (20), in particular a cheese, during the production or ripening thereof, the dairy product (20) including first and second faces (22, 24) and resting on a support (10) by means of its first face (22), **characterised in that** it comprises the steps consisting in:
a) subjecting the second face (24) of the dairy product (20) to suction in order to grip the latter and remove it from the support (10) by raising it,
b) subjecting the first face (22) of the dairy product (20) to suction,
c) ceasing to subject the second face (24) of the dairy product (20) to suction when or once the first face (22) is subjected to suction,
d) continuing to subject the first face (22) to suction and pivoting the dairy product (20) on itself so as to position its second face (24) in the immediate vicinity of the support (10), facing the latter, and
e) ceasing to subject the first face (22) to suction so as to release the dairy product (20) so that it comes to rest on the support (10) by means of its second face (24).

2. A method according to claim 1, **characterised in that** it consists in moving the support (10) from an upstream position to a downstream position when the dairy product (20) is removed from the said support (10).

3. A method according to claim 2, **characterised in that** the second face (24) of the dairy product (20) is subjected to suction when the support (10) is in its upstream position, whereas the first face (22) of the dairy product (20) is subjected to suction when the support (10) is in its downstream position.

4. A method according to claim 2 or claim 3, **characterised in that** the support (10) is moved between its upstream and downstream positions by a conveyor (40) driven with a stepwise movement.

5. A method according to any one of the preceding claims, **characterised in that** it comprises, after step a), a step consisting in disposing the dairy product (20) vertically in order to subject its first face (22) to suction.

6. A method according to any one of claims 1 to 4, **characterised in that** it comprises, after step a), a step consisting in holding the dairy product (20) horizontally in order to subject its first face (22) to suction.

7. A method according to any one of the preceding claims, **characterised in that** it is used for the simultaneous turning of several dairy products (20) having the same section placed on a common support (10), said dairy products (20) having identical or different thicknesses.

8. A device for turning at least one dairy product (20), in particular a cheese, during the production or ripening thereof, the dairy product (20) including first and second faces (22, 24) and resting on a support (10) by means of its first face (22), **characterised in that** it comprises:
- a first means (50) for subjecting the second face (24) of the dairy product (20) to suction in order to grip the latter and remove it from the support (10) by raising it, and
- a second means (60) for subjecting the first face (22) of the dairy product (20) to suction, retrieving the latter from the first suction means (50), pivoting the dairy product (20) on itself so as to position its second face (24) in the immediate vicinity of the support (10), facing the latter, and resting the dairy product (20) on the same support (10) by means of its second face (24).

9. A device according to claim 8, **characterised in that** it comprises a conveyor (40) carrying the support (10) and driven with a stepwise movement in order to move the said support (10) from an upstream position to a downstream position, the first and second suction means (50, 60) being disposed plumb with the conveyor (40), in the direction of displacement (D) thereof.

10. A device according to claim 8, **characterised in that** it comprises a conveyor (40) carrying the support (10) and driven with a stepwise movement in order to move the said support (10) from an upstream position to a downstream position, the first and second suction means (50, 60) being disposed plumb with the conveyor (40), perpendicularly thereto.

11. A device according to any one of claims 8 to 10, **characterised in that** the suction means (50, 60) each comprise a flexible suction plate (56) adapted to the shape and/or thickness of the dairy products (20) to be turned.

12. A device according to any one of claims 8 to 10, **characterised in that** the suction means (50, 60) each comprise a network (53) of flexible suction cups (55) adapted to the shape and/or thickness of the dairy products (20) to be turned.

13. A device according to any one of claims 8 to 12, **characterised in that** the suction means (50, 60) are mounted to move in rotation relative to one another so as to turn the dairy product (20) on itself.

14. A device according to claim 13, **characterised in that** the first and second suction means (50, 60) are each adapted to pivot through 90° so that they can be disposed either facing the conveyor (40) in initial and final positions or facing one another in an intermediate position for transferring the dairy product (20) from the first suction means (50) to the second suction means (60).

15. A device according to claim 13, **characterised in that** the second suction means (60) is adapted to pivot through ± 180° so that it can be disposed either facing the conveyor (40) in initial and final positions or below the first suction means (50) in an intermediate position for transferring the dairy product (20) from the first suction means (50) to the second suction means (60).
